# EUROPÄISCHE PATENTSCHRIFT

(11) **EP 0 994 267 B1**
(45) Veröffentlichungstag und Bekanntmachung des Hinweises auf die Patenterteilung: **23.08.2006**
(21) Anmeldenummer: 99118712.1
(22) Anmeldetag: 22.09.1999
(51) Int. Cl.: F16D 23/06

(54) **Sperr-Synchronring für synchronisierte Schaltgetriebe**
Blocking-synchroniser ring for synchronised speed-changing transmission
Anneau de blocage et de synchronisation pour boîtes de vitesses

(30) Priorität: 13.10.1998 DE 19847139
(43) Veröffentlichungstag der Anmeldung: 19.04.2000
(73) Patentinhaber: HOERBIGER Antriebstechnik GmbH, 86956 Schongau (DE)
(72) Erfinder: Rank, Robert, Dr.-Ing., 86946 Vilgertshofen-Stadl (DE)
(74) Vertreter: Schmitz, Hans-Werner

(56) Entgegenhaltungen:
- EP-A- 0 276 382
- EP-A- 0 328 910
- EP-A- 0 515 243
- EP-A- 0 521 843
- WO-A-92/11473
- DE-A- 19 626 194
- FR-A- 1 152 699

## Beschreibung

Die Erfindung betrifft einen Sperr-Synchronring für synchronisierte Schaltgetriebe nach dem Oberbegriff des Anspruches 1. Ein derartiger Sperr-Synchronring ist aus der DE-PS 966 366 bekannt. Weiteren gattungsgemäßen Stand der Technik stellen die DE 196 26 194 und die DE-AS 23 24 860 dar.

Aus der EP-A-0 276 382 ist eine weitere Synchronisiereinrichtung für Wechselgetriebe bekannt, die eine Schaltmuffe aufweist, die zwei unterschiedliche Gruppen von Zähnen aufweist. Die eine Gruppe umfasst Haltezähne, die an beiden Seitenflanken Ausnehmungen aufweisen, während die andere Gruppe Führungszähne umfasst, die an einander gegenüberliegenden Seitenflanken keine Ausnehmungen aufweist. Hierdurch soll es möglich sein, einen störungsfreien geradlinigen Schaltablauf zu erzielen, der frei von Verhakungen ist und den Verschleiß an der Synchronisiereinrichtung verringern hilft.

Bekanntermaßen zeichnen sich Synchronschaltgetriebe dadurch aus, dass stets alle Zahnradpaare dauernd im Eingriff sind und die verschiedenen Übersetzungen erst durch Verschieben einer Schaltmuffe zur Wirkung gebracht werden. Neben den die Schaltstufen definierenden Zahnradpaaren, die einerseits als Losräder auf der Getriebewelle angeordnet sind und andererseits auf einer Vorgelegewelle drehfest vorgesehen sind, weist ein Synchrongetriebe ferner Kupplungskörper auf, die eine Schaltverzahnung und einen Reibkonus umfassen. Der mit dem Kupplungskörper zusammenwirkende Synchronring weist einen Gegenkonus auf und eine Sperrverzahnung. Ferner ist ein Synchronkörper vorgesehen, der eine Innenverzahnung zum Formschluß auf der Getriebewelle und eine Außenverzahnung aufweist, die mit einer Schaltmuffe zusammenwirkt.

Die Sperrzähne der Sperrverzahnung bekannter Synchronringe weisen jeweils denselben Sperrwinkel auf. Der Sperrwinkel wiederum hängt jedoch vom Reibmoment ab. Das Reibmoment ist jedoch wiederum von der jeweiligen Konstruktion des Getriebes abhängig, die teilweise mit sogenannten Doppelkonus- oder auch Mehrfachkonus-Synchronringen versehen sind oder aber mit Einfachkonus-Synchronringen oder mit ebenen Lamellenkupplungen.

Entsprechend den Grundgleichungen für die sichere Auslegung von ebenen und konischen Sperrsynchronsystemen zum Drehzahlangleich beim Schalten von synchronisierten Getrieben bzw. Wechselradgetrieben gilt: solange kein Gleichlauf der zu synchronisierenden Bauteile besteht, müssen die im Reibkontakt bzw. den Reibkontakten erzeugten Reibmomente T_{R} der Sperrsysteme immer größer sein als das Indexmoment T_{I} aus der Umfangskraft F_{U} am Sperrsystem.

Die Umfangskraft entsteht aus der Kräftezerlegung der über die Schaltmuffe aufgebrachten Schaltkraft F_{S} in Abhängigkeit von den Dachschrägen der Sperrverzahnung. Die Bedingung T_{R} > T_{I} verhindert ein vorzeitiges Durchschalten bei noch bestehender Differenzdrehzahl. Es kann die Verzahnung der Schiebemuffe nicht an der Sperrverzahnung abgleiten, weil der Sperr-Synchronring sich nicht relativ zur Schiebemuffe verdreht und seine Sperrposition hält.

Bei einer falschen Auslegung der Sperrgeometrie kann sich die Schiebemuffe bei noch bestehender Differenzdrehzahl zwischen den Reibflächen relativ zum Sperr-Synchronring verdrehen, weil das Indexmoment aus der Kraft F_{U} größer ist als das Reibmoment T_{R}. Die zu synchronisierenden Elemente Schiebemuffe und Wechselrad bzw. Losrad treffen dann mit Relativdrehzahl aufeinander.

Die Auslegung der Sperrwinkel wird in Abhängigkeit der Einflußparameter auf das Reibmoment (Reibwerkstoff, Schmierstoff, erreichte Reibungszahl im Reibkontakt) sowie der Geometrie (Sperrverzahnungsdurchmesser, Reibdurchmesser, Kegelwinkel, Anzahl der Reibflächen) vorgenommen, um einerseits eine funktionssichere Synchronisierung, die mit möglichst stumpfen Sperrwinkeln erreicht wird, und andererseits ein komfortables Durchschalten, das mit möglichst spitzen Sperrwinkeln erreicht wird, zu ermöglichen.

Dies bedeutet, daß die Sperrgeometrie für jedes Synchronsystem optimal in Abhängigkeit aller dieser Einflußgrößen ausgeführt werden muß.

Für Systeme mit unterschiedlichen Reibmomenten, wie beispielsweise Einfachkonus- bzw. Mehrkonussysteme, in gekoppelter oder entkoppelter Bauweise ergibt sich somit die Anforderung einer jeweils spezifisch abgestimmten Sperrgeometrie, da hier unterschiedlich hohe Reibmomente erzeugt werden. Daher muß für jedes System ein speziell angepaßter Sperr-Synchronring mit definiertem Sperrwinkel verwendet werden. Dies ergibt bei bekannten Systemen einen relativ hohen Aufwand an Teilen und damit eine Kostenerhöhung.

Es ist daher Aufgabe der vorliegenden Erfindung, einen Sperr-Synchronring der im Oberbegriff des Anspruches 1 angegebenen Art zu schaffen, der bei unterschiedlichen Synchronsystemen mit unterschiedlichen Reibmomenten verwendbar ist.

Die Lösung dieser Aufgabe erfolgt durch die Merkmale des Anspruches 1.

Der erfindungsgemäße Sperr-Synchronring zeichnet sich dadurch aus, daß die Sperrzähne seiner Sperrverzahnung Dachschrägen mit unterschiedlichen Sperrwinkeln aufweisen. Dieser Sperr-Synchronring ist somit in Verbindung mit einer geeignet ausgeführten Schiebemuffe für die verschiedenen Synchronsysteme (wie beispielsweise Einfachkonus- oder Mehrfachkonus-Systeme oder Reibwerkstoff/Schmierstoffkombination mit hoher bzw. niedriger Reibungszahl) einsetzbar, wobei er bereits für den spezifischen Anwendungsfall optimal angepaßte Sperrgeometrie aufweist.
Dadurch wird vor allem erreicht, daß ein derart ausgebildeter erfindungsgemäßer Synchronring durch die vielfältige Einsetzbarkeit in höherer Stückzahl produziert werden kann, was zur Senkung der spezifischen Werkzeugkosten beiträgt.

Die Unteransprüche haben vorteilhafte Weiterbildungen der Erfindung zum Inhalt.

So ist es bei einer bevorzugten Ausführungsform möglich, die Dachschrägen der Sperrzähne der Sperrverzahnung des Synchronrings mit zwei unterschiedlichen Sperrwinkelmaßen zu versehen, wobei beispielsweise ein spitzer Winkel und ein stumpfer Winkel vorgesehen werden kann. Bei dieser Ausführungsform wechseln sich die Sperrmaße regelmäßig ab, so daß beispielsweise die Sperrzähne abwechselnd einen spitzen Sperrwinkel, einen stumpfen Sperrwinkel, einen spitzen Sperrwinkel, einen stumpfen Sperrwinkel usw. aufweisen. Grundsätzlich ist jedoch auch denkbar, daß nur spitze Winkel mit unterschiedlichen Winkelgrößen oder nur stumpfe Winkel mit unterschiedlichen Winkelgrößen in der genannten regelmäßigen Abfolge vorgesehen sind.

Bei einer alternativen Ausführung ist es möglich, die unterschiedlichen Sperrwinkelmaße regelmäßig abwechselnd aber blockweise vorzusehen, so daß sich eine Anordnung ergibt, bei der beispielsweise zwei Sperrwinkel mit spitzem Winkel von zwei Sperrwinkeln mit stumpfem Winkel, dann wieder zwei Sperrwinkel mit spitzem Winkel usw. vorgesehen sind. Es versteht sich, daß die blockweise Anordnung auch mehr als zwei Sperrwinkel mit gleichem Sperrwinkelmaß umfassen kann.

Ferner ist es möglich, unterschiedliche Sperrwinkel auf unterschiedlichen Sperrzahnhöhen vorzusehen.
Bei einer weiteren bevorzugten Ausführungsform kann vorgesehen werden, daß die Sperrwinkel für das Hochschalten (also vom ersten in den zweiten, vom zweiten in den dritten, vom dritten in den vierten usw.) und die Sperrwinkel für die Rückschaltung (also in umgekehrter Gangfolge) unterschiedlich sind.

Als eine weitere alternative Ausführungsform ist es denkbar, die Dachschrägen der Sperrzähne mit unterschiedlicher Neigung zu versehen. Man könnte hier auch von der Ausbildung zweier unterschiedlicher Sperrwinkel an einem Sperrzahn sprechen, vorausgesetzt, man definiert den Sperrwinkel zu den beiden Seiten einer Sperrzahnmittellinie, die durch die Dachschrägenspitze verläuft. Hierbei wiederum wäre es möglich, die Ausrichtung der unterschiedlich geneigten Dachschrägen jeweils über den gesamten Synchronring gleichzuhalten oder aufeinander abwechselnd vorzusehen, also daß die Dachschrägen mit gleicher Neigung benachbarter Sperrzähne jeweils aufeinander zuweisen.

Der erfindungsgemäße Synchronring kann somit grundsätzlich bei sogenannten Einfachkonus-Systemen, bei Mehrfachkonus-Systemen wie auch bei der Verwendung von Lamellenkupplungen im Schaltgetriebe Anwendung finden.

Die bei einem derartigen Synchronring zu verwendende Schaltmuffe ist eine indexierte Schaltmuffe, die eine der Sperrwinkelauslegung des erfindungsgemäßen Synchronringes entsprechende Zuordnung ihrer Innenverzahnung aufweist.

Weitere Einzelheiten, Merkmale und Vorteile der Erfindung ergeben sich aus nachfolgender Beschreibung von Ausführungsbeispielen anhand der Zeichnung.

Es zeigt:
- Fig. 1: eine perspektivische Darstellung von Elementen eines synchronisierten Schaltgetriebes zur Erläuterung der Prinzipien vorliegender Erfindung;
- Fig. 2A, 2B: schematische Darstellungen der Abwicklung von Sperrzähnen des erfindungsgemäßen Synchronringes;
- Fig. 3A, 3B: den Fig. 2A, 2B entsprechende schematische Darstellungen einer zweiten Ausführungsform des erfindungsgemäßen Synchronringes;
- Fig. 4A, 4B: eine Fig. 2 und 3 entsprechende Darstellung einer dritten Ausführungsform des erfindungsgemäßen Synchronrings;
- Fig. 5: eine den Fig. 2 bis 4 entsprechende Darstellung einer vierten Ausführungsform des erfindungsgemäßen Synchronringes;
- Fig. 6: eine Stirnansicht auf eine Schaltmuffe;
- Fig. 7 bis 10: den Fig. 2 5 entsprechende Darstellungen zur Erläuterung der funktionalen Zuordnung von Synchronring und Schalt- bzw. Schiebemuffe; und
- Fig. 11 und 12: eine den Fig. 7 bis 10 entsprechende Darstellung.

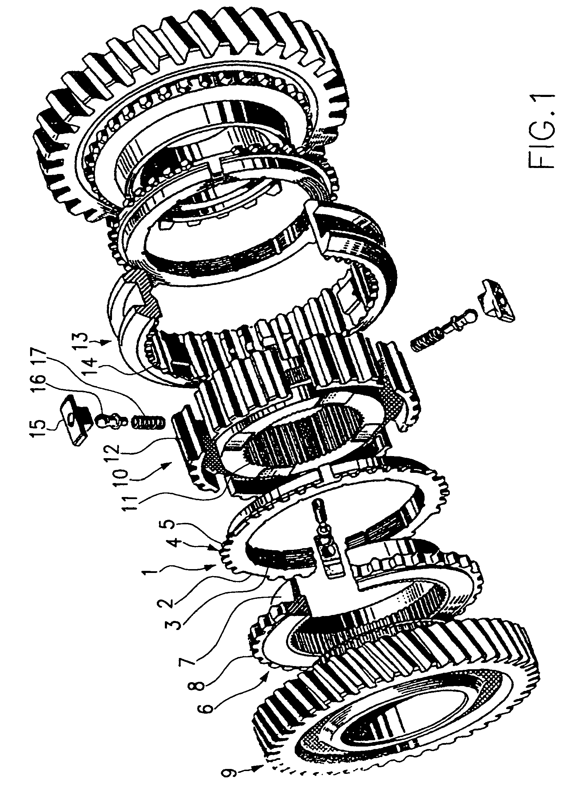

In Fig. 1 sind zur Erläuterung der Prinzipien vorliegender Erfindung wichtige Elemente eines synchronisierten Schaltgetriebes dargestellt.

Es handelt sich hierbei zunächst um einen Synchronring 1, der einen Ringkörper 2 mit einer inneren Reibfläche 3 aufweist. Die Reibfläche ist im Beispielsfalle konisch ausgebildet.

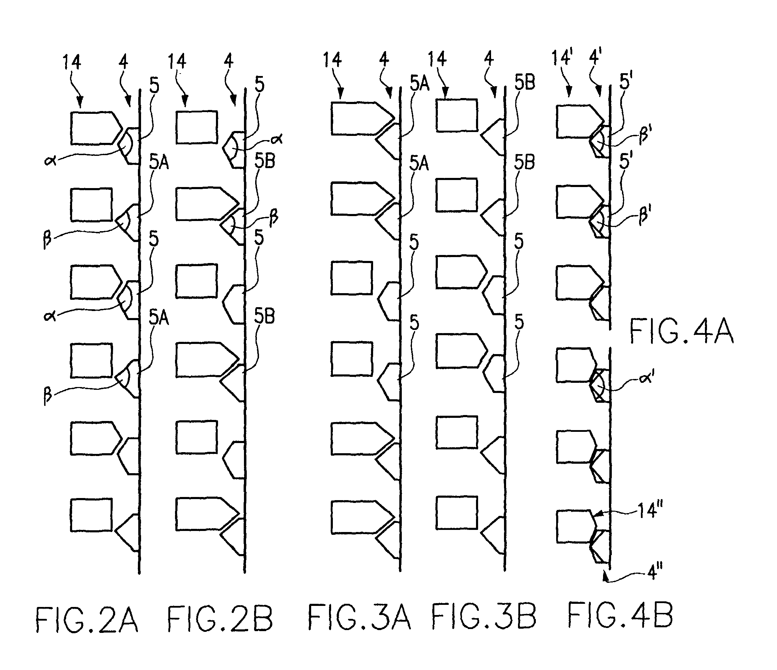

Am Außenumfang des Ringkörpers 2 ist eine Sperrverzahnung 4 ausgebildet, die eine Mehrzahl von Sperrzähnen 5 aufweist. Die Sperrzähne 5 sind umfangsseitig am Ringkörper 2 verteilt angeordnet. Die Ausführung der Sperrzähne des erfindungsgemäßen Synchronringes wird nachfolgend insbesondere anhand der Fig. 2 bis 5 näher erläutert.

Ferner ist in Fig. 1 ein Kupplungskörper 6 dargestellt, der einen Reibkonus 7 aufweist, der mit der Reibfläche 3 des Synchronringes 1 beim Schaltvorgang zusammenwirkt. Ferner weist der Kupplungskörper 6 eine umfangsseitig angeordnete Schaltverzahnung 8 auf.

Fig. 1 verdeutlicht ferner ein Getriebe- bzw. Losrad 9, das mit dem Kupplungskörper 6 formschlüssig verbunden wird und das auf der in Fig. 1 nicht dargestellten Getriebewelle mittels eines Lagers drehbeweglich angeordnet ist. Das Losrad 9 steht dauerhaft mit einem in Fig. 1 ebenfalls nicht dargestellten weiteren Zahnrad in Eingriff, das drehfest auf einer Vorgelegewelle befestigt ist. Das Losrad mit seinem Gegenrad bestimmt das Übersetzungsverhältnis des jeweils zu schaltenden Ganges.

Ferner zeigt Fig. 1 einen Synchronkörper 10 mit einer Innen- und Außenverzahnung 11 bzw. 12.

Neben dem Synchronkörper 10 ist eine Schaltmuffe 13 dargestellt, die eine Klaueninnenverzahnung 14 aufweist. Schließlich sind in Fig. 1 insgesamt drei Druckstücke mit Kugelbolzen und Druckfeder dargestellt, von denen eine Kombination mit den Bezugsziffern 15, 16, 17 bezeichnet ist. Auf der rechten Seite der Fig. 1 sind nochmals ein Synchronring, ein Kupplungskörper und ein weiteres Losrad dargestellt, die in ihrem Aufbau den zuvor beschriebenen entsprechenden Teilen entsprechen und einen weiteren Gang definieren.

Um die Prinzipien vorliegender Erfindung besser zu verstehen, wird nachfolgend das Zusammenwirken der zuvor beschriebenen Elemente zur Erläuterung des synchronisierten Schaltvorganges beschrieben:

Der Synchronkörper 10 ist fest auf der nicht dargestellten Getriebewelle des Schaltgetriebes angeordnet. Der Synchronring 1 wird im Synchronkörper 10 über Anschlagnasen geführt. Diese sind schmaler ausgebildet als im Synchronkörper 10 vorgesehene Nuten, in die die Anschlagnasen eingreifen. Dadurch kann sich der Synchronring 1 um einen bestimmten Betrag radial verdrehen.

Vor Beginn des Schaltens wird die Schaltmuffe 13 mittels einer Rastierung in einer Mittelstellung gehalten. Die Rastierung der Schalt- bzw. Schiebemuffe erfolgt an Schaltstangen einer Schaltgabel. Die Kugel-Federeinheiten 15, 16, 17 halten das Element bzw. die Druckstücke 15 relativ zur Schaltmuffe 13 in Position und verhindern somit ein ungewolltes Ansynchronisieren. Eine anstehende Schaltkraft leitet die Axialbewegung der Schaltmuffe 13 ein, wobei die Druckstücke 15 über die Kugelbolzen 16 zunächst den Synchronring 1 mit seiner Reibfläche 3 an die komplementäre Reibfläche bzw. den Reibkonus 7 des Kupplungskörpers 6 drücken. Infolge der vorhanden Drehzahldifferenz von Schaltmuffe 13 und Synchronring 1 gegenüber dem Losrad 9 wird der Synchronring 1 bis zum Anschlagen der Nasen an die Nutwandung des Synchronkörpers 10 verdreht. Diese erste Phase des Synchronisiervorgangs nennt man Ansynchronisieren.

Die Schaltmuffe 13 wird sodann weiterbewegt. Dadurch berühren sich die Dachschrägen der Klauen-Innenverzahnung 14 der Schaltmuffe 13 und die Zähne 5 der Sperrverzahnung 4 des Synchronringes 1. Die Hauptsynchronisation beginnt in dieser Phase. Die Schaltkraft wird arbeitsteilig über die Druckstücke 15 und Klauen der Schaltmuffe in den Synchronring 1 eingeleitet. An den Dachschrägen entsteht das die Sperreinrichtung öffnende Verzahnungsmoment. Das Verzahnungsmoment ist kleiner als das schließende Reibmoment. Die Schaltmuffe 13 läßt sich in dieser Rutschphase nicht schalten. In der Literatur wird das Verzahnungsmoment häufig als Indexmoment und das Reibmoment als Konusmoment bezeichnet.

Mit Erreichen des Gleichlaufs strebt in einer dritten Phase das Reibmoment gegen 0. Der Entsperrvorgang beginnt. Das Verzahnungsmoment wird größer als das Reibmoment und bewirkt über die Dachschrägen ein Rückdrehen des Synchronringes 1. Die Schaltkraft sinkt in dieser Phase stark ab. Während der gesamten Axialbewegung der Schaltmuffe 13 gleitet der angefederte Kugelbolzen 16 entlang der schrägen Nutfläche. Er wird dabei gegen die Feder 17 in das Druckstück 15 gedrückt, bis er von der Schaltmuffe 13 überschoben wird.

Beim Durchschalten trifft die Schaltmuffenverzahnung 14 auf die Dachschrägen der Schaltverzahnung 8 des Kupplungskörpers 6. In dieser vierten Phase ist der Kugelbolzen 17 überschoben. Lediglich eine Restkraft drückt noch über die Druckstücke 15 den Synchronring 1 in den Reibkonus 7 des Kupplungskörpers 8. Die Restandrückkraft resultiert aus der Reibung zwischen der bewegten Schaltmuffe 13 und den Druckstücken 15. Die Schaltmuffenverzahnung 14 verdreht den Kupplungskörper 8 relativ zum Synchronring 1. Der Schaltweg wird frei. Die Schaltmuffe 13 stellt den Leistungsfluß zwischen Gangradpaar und Getriebewelle in der fünften Phase formschlüssig her.

Wie eingangs erläutert wurde, gibt es bei dem zuvor im Prinzip dargestellten System eines synchronisierten Schaltgetriebes Synchronsysteme mit Einfach- und Mehrfachreibflächen, die konusförmig oder eben ausgebildet sein können. Hieraus resultieren unterschiedliche Reibmomente, was es wiederum bei bekannten Getrieben erforderlich macht, Synchronringe mit jeweils angepaßten Sperrverzahnungen auszubilden, die unterschiedliche Sperrwinkel haben, wobei jedoch bei bekannten Systemen ein Synchronring jeweils einen identischen Sperrwinkel bei allen Sperrzähnen hat.

Der erfindungsgemäße Synchronring, der in Fig. 1 von seinem prinzipiellen Aufbau her dargestellt ist, weist jedoch Sperrzähne mit Dachschrägen auf, die unterschiedliche Sperrwinkel aufweisen. Hierzu wird nachfolgend insbesondere auf die Fig. 2A, 2B, 3A, 3B, 4 und 5 sowie 7 bis 10 Bezug genommen.

Die Fig. 2A bis 5 und 7 bis 10 stellen hierbei Prinzipdarstellungen der Sperrverzahnung des Synchronringes 1 sowie der Verzahnung der Schaltmuffe 13 dar.

Dementsprechend zeigt Fig. 2A eine erste Ausführungsform der Sperrverzahnung 4 mit einer Mehrzahl von Sperrzähnen 5, 5A, 5, 5A usw. Bei dieser Ausführungsform weisen die Sperrzähne 5, 5A unterschiedliche Sperrwinkel α, β auf, die jeweils regelmäßig abwechselnd aufeinander folgen, wie sich das im Einzelnen aus Fig. 2A ergibt. Im Beispielsfalle ist der Winkel α ein stumpfer Winkel und der Winkel β ein spitzer Winkel. Die Sperrverzahnung gemäß Fig. 2A ist hierbei für die Funktion als Einfachkonus-Synchronsystem vorgesehen. Bei dieser Verzahnung ist der stumpfe Winkel α wirksam, der sich ebenfalls bei der Schaltmuffenverzahnung 14 findet. Um eine höhere erforderliche Sperrsicherheit erreichen zu können, muß der Winkel α für ein Einfachkonussystem (oder ein entkoppeltes Mehrfachkonussystem), bei dem nur eine Reibfläche in die Sperrgleichung eingeht, stumpf sein.

Die Sperrverzahnung 4 gemäß Fig. 2B ist entsprechend derjenigen von Fig. 2A ausgebildet, hier ist jedoch die Sperrverzahnung für die Funktion als Mehrfachkonussysstem oder ein ebenes Reibsystem (Lamellensynchronisierung) vorgesehen. Ansonsten entspricht sie jedoch der Sperrverzahnung gemäß Fig. 2A, zur Unterscheidung sind jedoch die Sperrzähne mit dem spitzen Winkel β mit "5B" bezeichnet. Mit anderen Worten zeigt Fig. 2B den identischen Synchronring wie Fig. 2A, jedoch mit einer geändert aufgebauten Schaltmuffenverzahnung 14, die für das Mehrfachkonussystem mit dem Winkel β ausgeführt ist. Der für diese Funktion notwendige korrespondierende Winkel β ist auf Seiten des Synchronrings am Sperrzahn 5B angeordnet. Da bei dieser Ausführungsform für Mehrflächensysteme höhere Sperrmomente auftreten, sind spitzere Winkel als im Falle der Fig. 2A möglich. Beispielsweise können die Winkel α in einem Bereich von 105° bis 130° liegen, während die Winkel β in einem Bereich von 80° bis 105° liegen können.

Um eine eindeutige funktionsfähige Zuordnung der Sperrverzahnungen mit den Winkeln α oder β sicherzustellen, werden an der Schaltmuffe 13 bei der Ausführung gemäß Fig. 2A die Anspitzungen der Zähne, die den Sperrzähnen 5A zugeordnet sind, angefertigt, während im Falle der Fig. 2B die Anspitzungen der Zähne der Schaltmuffenverzahnung 14 entfernt werden, die den Sperrzähnen 5 zugeordnet sind.

In den Fig. 3A und 3B ist jeweils eine zweite Ausführungsform einer Sperrverzahnung 4 dargestellt, bei der wiederum Sperrzähne 5 mit stumpfen Winkeln α und Sperrzähne 5A bzw. 5B mit spitzen Winkeln β vorgesehen sind. Die Verzahnungen gemäß den Fig. 3A und 3B unterscheiden sich jedoch von derjenigen gemäß Fig. 2A und 2B dadurch, daß hier jeweils eine blockweise Anordnung von Sperrzähnen mit gleichem Sperrwinkel vorgesehen ist. So sind bei dieser Ausführung jeweils Blöcke aus zwei Zähnen 5, 5 bzw. 5A, 5A und 5, 5 bzw. 5B, 5B vorgesehen, die sich blockweise nacheinander abwechseln, wie sich dies im Einzelnen aus diesen Figuren ergibt. Die Fig. 3A und 3B dokumentieren somit den gleichen Sachverhalt wie im Falle der Fig. 2A und 2B, wobei jedoch die Sperrzähne nicht abwechselnd (spitz-stumpf-spitz-stumpf) angeordnet sind, sondern, wie zuvor erläutert, in Blöcken (stump-stumpf-spitz-spitz). Auch hier wird eine jeweils für den Einsatzfall Einfachkonus oder Mehrfachkonus speziell angefertigte Schalt- bzw. Schiebemuffe mit Winkel α oder Winkel β eingesetzt.

In Fig. 4A, 4B ist eine dritte Ausführungsform einer Sperrverzahnung 4' dargestellt, die Sperrzähne 5' mit unterschiedlichen Winkeln auf unterschiedlichen Zahnhöhen aufweist. Im einzelnen bedeutet dies, daß in den Fig. 4A und 4B die Winkel α' bzw. β' über der Zahnhöhe des Synchronrings unterschiedlich ausgeführt sind. Die Schaltmuffe 13 muß hierbei so gefertigt werden, daß deren Verzahnung 14' auf einem größeren Durchmesser (obererer Bereich des Synchronringzahnes) zur Anlage kommt, wenn der Winkel β' wirken soll (vgl. Fig. 4A). Wenn der Winkel α' wirken soll, müssen die Kontaktflächen der Verzahnung 14" an der Schaltmuffe 13 sich auf einer geringeren Zahnhöhe berühren, was sich aus Fig. 4B ergibt. Die Schalt- bzw. Schiebemuffen müssen hierfür unterschiedlich gefertigt sein.

Zusammenfassend ist festzuhalten, daß in den Fig. 2A bis 4B jeweils unterschiedliche Winkelausführungen an den Sperrzähnen des Synchronrings 1 dargestellt sind. Die jeweilige Unterteilung in A bzw. B der Figuren stellen die Zuordnung für die Funktion mit den Winkeln α bzw. β dar.

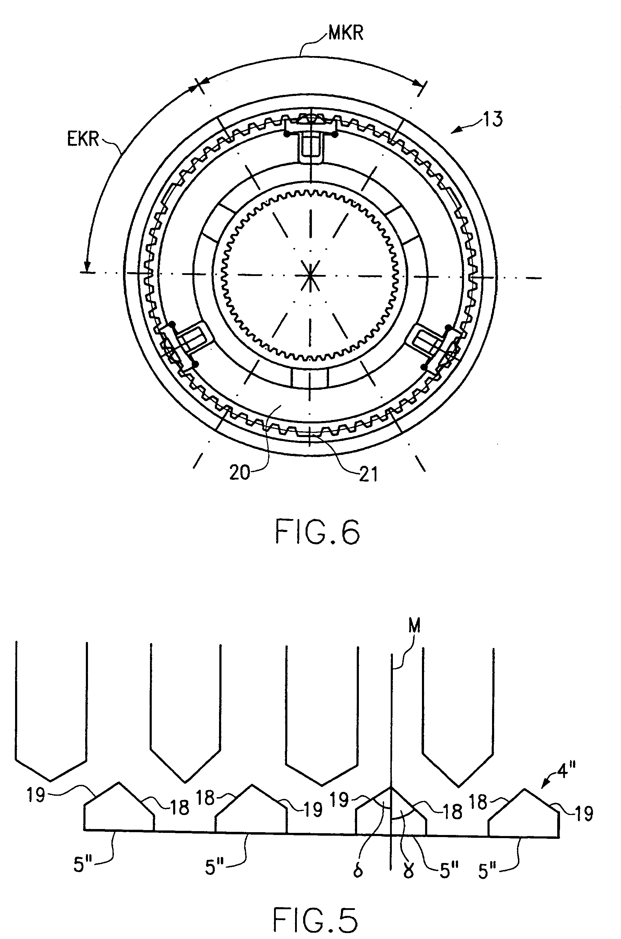

In Fig. 5 ist eine weitere Ausführungsform eines erfindungsgemäßen Synchronringes dargestellt. Bei dieser Ausführungsform weist die Sperrverzahnung 4'' Sperrzähne 5'' auf, deren Dachschrägen 18, 19 unterschiedliche Neigung aufweisen. Es ergeben sich somit zu beiden Seiten einer Mittellinie M durch den Sperrzahn 5'', die die Spitze zwischen den Dachschrägen 18 und 19 schneidet, zwei Winkel δ und σ, die unterschiedlich groß sind. Obwohl üblicherweise als Sperrwinkel der Winkel bezeichnet wird, den die Dachschrägen einschließen und somit pro Sperrzahn an und für sich immer bloß ein Sperrwinkel definiert ist, könnte bei dieser Ausführungsform von einer Sperrzahnausbildung gesprochen werden, die zwei Sperrwinkel δ, σ unterschiedlicher Größe an einem einzigen Zahn aufweist. Fig. 5 verdeutlicht hierbei ferner, daß jeweils Dachschrägen 19, 19 an zwei benachbarten Sperrzähnen 5'', 5'' aufeinander weisen wie auf der anderen Seite jeweils die anderen Dachschrägen 18, 18 am jeweils anderen benachbarten Sperrzahn 5''. Diese Anordnung verläuft regelmäßig abwechselnd über den gesamten Synchronring.

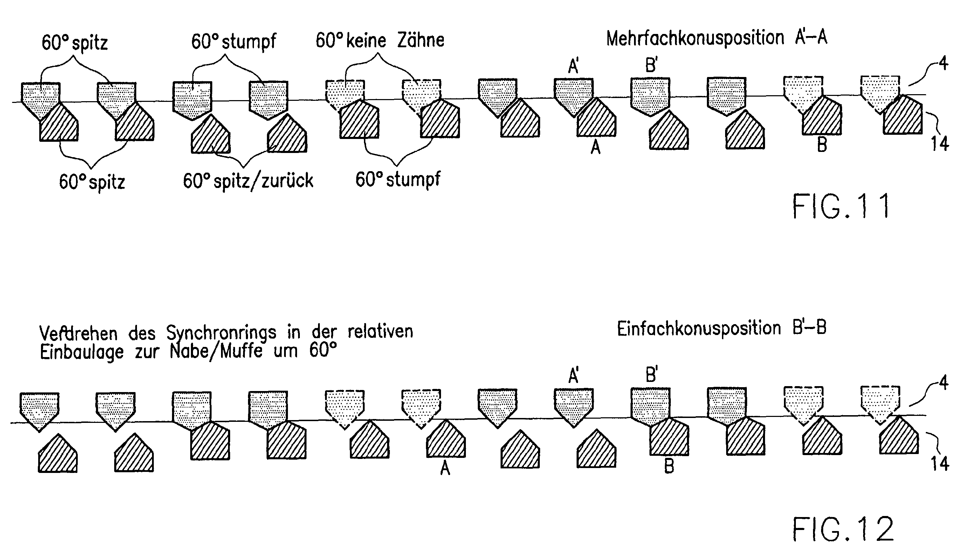

In Fig. 6 ist eine Ausführungsform einer erfindungsgemäßen Schiebemuffe 13 im einzelnen dargestellt. Aus den Fig. 2 bis 5 wird deutlich, daß eine speziell gefertigte Schiebemuffe bzw. Schaltmuffe 13 mit den für den Einsatzfall entsprechenden Verzahnungen 14 mit ihren Verzahnungswinkeln vorzusehen ist. Durch geschickte Anordnung kann über die Lagezuordnung des Synchronrings 1 zur Schiebemuffe 13 die Schiebemuffe und der Synchronring multifunktional verwendet werden, was sich aus der nachfolgenden Erläuterung der Fig. 11 und 12 ergibt.

In Fig. 11 ist die Schaltmuffenverzahnung 14 der Schaltmuffe 13 und die Sperrverzahnung 4 des Synchronrings 1 als Abwicklung dargestellt und in jeweils 6 Sektoren zu 60° aufgeteilt. Dies ist beispielsweise auf der linken Seite in Fig. 11 mit den Angaben "60° spitz, 60° stumpf, 60° keine Zähne" für beide Verzahnungen gekennzeichnet. Da sich nach 180° am Umfang diese Anordnung wiederholt, sind in Fig. 11 auf der linken Seite lediglich 3 Sektoren dargestellt, wobei sich die Sperrwinkel von Sektor zu Sektor ändern. Zu erwähnen ist, daß eine feinere Aufteilung in 12 oder 18 Sektoren grundsätzlich möglich ist.

Auf der rechten Seite der Fig. 11 ist zudem die Positionierung der Schaltmuffe 13 und des Synchronrings 1 für ein Mehrfachkonussystem unter der Überschrift "Mehrfachkonusposition A-A" dargestellt.

Fig. 12 zeigt die identischen Bauteile gemäß Fig. 11, jedoch durch Veränderung der relativen Zuordnung von Schaltmuffe 13 und Synchronring 1 um 60° am Umfang ist dieses System für den Einsatz als Einfachkonussystem ausgelegt.

Zur Fig. 6 wäre nachzutragen, daß die dortigen Sektoren "EKR" den Bereich einer Sperrverzahnung für einen Synchronring mit einem Einfachkonus darstellt, während der mit "MKR" bezeichnete Bereich für einen Mehrfachkonusring vorgesehen ist. In Uhrzeigerrichtung dem Bereich, "MKR" folgend liegt ein 60° Bereich für spitze Sperrwinkel in zurückversetzter Position, daraufhin ein 60° Bereich für stumpfe Sperrwinkel, daraufhin wiederum ein 60° Bereich für spitze Sperrwinkel und schließlich ein zurückversetzter 60°-Sektor für spitze Sperrwinkel.

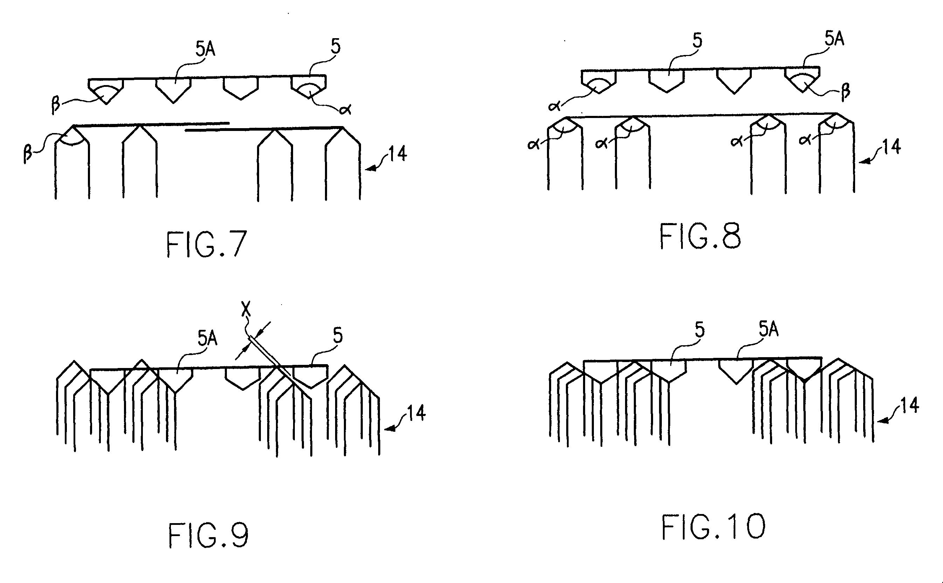

In den Fig. 7 bis 10 ist prinzipiell derselbe Sachverhalt wie in den Fig. 11 und 12 detailliert dargestellt.

Fig. 7 zeigt die notwendige funktionelle Zuordnung bei einem Kontakt von Sperrverzahnungen mit spitzem Winkel (Sperrzähne 5A). Die Schaltmuffenverzahnung 14 der Schaltmuffe 13 muß im Bereich der stumpfen Winkel des Synchrongrings 1 zurückgenommen werden, damit keine Überschneidung auftritt. Der Ablauf der Überschiebebewegung ist dementsprechend in Fig. 9 dargestellt.

In Fig. 8, die einen Kontakt der Verzahnungen mit stumpfen Winkeln zeigt, ist eine Rücknahme der Verzahnungen für die nicht in Funktion befindlichen Bereiche nicht erforderlich. Die Zurückversetzung ist in Fig. 7 mit dem Maß "X" dargestellt.

Fig. 10 zeigt schließlich wiederum den Ablauf des Überschiebens.

Hieraus wird deutlich, daß die optimale mehrfunktionelle Ausbildung der Schiebemuffenverzahnung 14 und der Sperrverzahnung 4 des Synchronrings 1 Bereiche der Dachschrägen an der Schaltmuffe 13 erfordert, die spitzzurückgesetzt-stumpf aufeinanderfolgen. Die Ausführungen der Winkel am Synchronring 1 gliedert sich in die Bereiche spitz-stumpf-ohne Zähne.

Zu dem in den Fig. 9 und 10 dargestellten Ablauf des Überschiebens ist ferner zu sagen, daß in Fig. 9 die linke Seite der Sperrblock ist, während die rechte Seite der freie Block ist.

Dies trifft ebenfalls auf die Darstellung der Fig. 10 zu.

Hierbei werden als Sperrblock die Zähne bezeichnet, die im Einsatzfall für die Funktion notwendig sind und im Kontakt Schaltmuffe-Synchronring stehen. Als freier Block sind die Zähne bezeichnet, die im entsprechenden Eingriff nicht wirken sollen bzw. dürfen und deshalb, wenn erforderlich, zurückgesetzt sind.

Durch die jeweilige Ausgestaltung der Winkel an der Sperrverzahnung 14 der Schaltmuffe 13 kann die eindeutige Sperrflächenzuordnung für die entsprechenden Winkel α oder β erreicht werden.

## Patentansprüche

1. Sperr-Synchronring (1) für synchronisierte Schaltgetriebe
- mit einem Ringkörper (2), der eine Reibfläche (3) zum Zusammenwirken mit einer komplementären Reibfläche (7) eines Kupplungskörpers (6) aufweist; und
- mit einer Sperrverzahnung (4; 4'; 4''), die eine Mehrzahl von umfangseitig am Ringkörper (2) angeordneten Sperrzähnen (5, 5A; 5, 5B; 5'; 5'') aufweist, wobei jeder Sperrzahn eine Dachschräge (18, 19) aufweist, die einen Sperrwinkel (α, β; δ, σ) einschließt, **dadurch gekennzeichnet,**
- **daß** die Sperrzähne (5, 5A; 5, 5B; 5'; 5'') Dachschrägen (18, 19) mit unterschiedlichen Sperrwinkeln (α, β; δ, σ) aufweisen, die bei den Sperrzähnen (5, 5A; 5, 5B; 5'; 5'') regelmäßig abwechselnd vorgesehen sind.

2. Synchronring nach Anspruch 1, **dadurch gekennzeichnet, daß** die Dachschräge zwei unterschiedliche Sperrwinkelmaße (α, α, β, β) aufweisen, die bei den Sperrzähnen (5, 5, 5A, 5A; 5, 5, 5B, 5B) regelmäßig abwechselnd bolckweise vorgesehen sind.

3. Synchronring nach Anspruch 1, **dadurch gekennzeichnet, daß** unterschiedliche Sperrwinkel auf unterschiedlichen Zahnhöhen vorgesehen sind.

4. Synchronring nach einem der Ansprüche 1 bis 3, **dadurch gekennzeichnet, daß** die Sperrwinkel (α, β; δ, σ) für die Hochschaltung und die Rückschaltung unterschiedlich sind.

5. Synchronring nach Anspruch 1, **dadurch gekennzeichnet, daß** die Dachschrägen (18, 19) unterschiedlich geneigt sind.

6. Synchronring nach einem der Ansprüche 1 bis 5, **dadurch gekennzeichnet, daß** die Reibfläche (3) als Einfachkonusreibfläche ausgebildet ist.

7. Synchronring nach einem der Ansprüche 1 bis 5, **dadurch gekennzeichnet, daß** die Reibfläche (3) als Mehrfachkonusreibfläche ausgebildet ist.

8. Synchronring nach einem der Ansprüche 1 bis 5, **dadurch gekennzeichnet, daß** die Reibfläche (3) als Lamellenreibfläche ausgebildet ist.

9. Schaltmuffe (13) für einen Synchronring (1) gemäß Anspruch 1 **gekennzeichnet durch** eine indexierte und an die Sperrwinkel angepaßte Innenverzahnung (14).

## Claims

1. Locking synchronisation ring (1) for synchronised shift transmissions
- having a ring member (2) possessing a friction surface (3) to act in conjunction with a complementary friction surface (7) of a clutch member (6); and
- having a locking toothed structure (4; 4'; 4'') possessing a plurality of locking teeth (5, 5A; 5, 5B; 5'; 5'') arranged at the circumference of the ring member (2), wherein each locking tooth has a pitched top (18, 19) enclosing a locking angle (α, β; δ, σ), **characterised in that**,
- the locking teeth (5, 5A; 5, 5B; 5'; 5'') have pitched tops (18, 19) having different locking angles (α, β; δ, σ) which are provided in regularly alternating manner in the locking teeth (5, 5A; 5, 5B; 5'; 5'').

2. Synchronisation ring according to claim 1, **characterised in that** the pitched top possesses two different locking angle sizes (α, α, β, β) which are provided in blocks in regularly alternating manner in the locking teeth (5, 5, 5A, 5A; 5, 5, 5B, 5B).

3. Synchronisation ring according to claim 1, **characterised in that** different locking angles are provided at different tooth heights.

4. Synchronisation ring according to any of claims 1 to 3, **characterised in that** the locking angles (α, β; δ, σ) for an upward gear change and for a downward gear change are different.

5. Synchronisation ring according to claim 1, **characterised in that** the pitched tops (18, 19) have different inclinations.

6. Synchronisation ring according to any of claims 1 to 5, **characterised in that** the friction surface (3) is constructed as a single cone friction surface.

7. Synchronisation ring according to any of claims 1 to 5, **characterised in that** the friction surface (3) is constructed as a multiple cone friction surface.

8. Synchronisation ring according to any of claims 1 to 5, **characterised in that** the friction surface (3) is constructed as a lamellar friction surface.

9. Gearshift control sleeve (13) for a synchronisation ring (1) according to claim 1, **characterised by** an indexed inner toothed structure (14) adapted to the locking angles.

## Revendications

1. Synchroniseur-bloqueur (1) destiné à un mécanisme de changement de vitesse synchronisé
- comprenant un corps annulaire (2) présentant une surface de friction (3) destinée à coopérer avec une surface de friction (7) complémentaire d'un corps d'accouplement (6) ; et
- comprenant une denture de blocage (4 ; 4' ; 4") présentant une pluralité de dents de blocage (5, 5A ; 5, 5B ; 5' ; 5") disposées sur le pourtour du corps annulaire (2), chaque dent de blocage présentant une pente (18, 19) qui délimite un angle de blocage (α, β ; δ, σ), **caractérisé en ce que**
- les dents de blocage (5, 5A ; 5, 5B ; 5' ; 5") présentent des pentes (18, 19) dont les angles de blocage (α, β ; δ, σ) sont différents et qui alternent de façon régulière, en ce qui concerne les dents de blocage (5, 5A ; 5, 5B ; 5' ; 5").

2. Synchroniseur selon la revendication 1, **caractérisé en ce que** les pentes présentent deux valeurs angulaires de blocage différentes (α, α, β, β) qui, en ce qui concerne les dents de blocage (5, 5, 5A, 5A ; 5, 5, 5B, 5B) alternent de façon régulière, par blocs.

3. Synchroniseur selon la revendication 1, **caractérisé en ce que** des angles de blocage différents sont prévus pour des hauteurs de dents différentes.

4. Synchroniseur selon l'une des revendications 1 à 3, **caractérisé en ce que** les angles de blocage (α, β ; δ, σ) sont différents, selon qu'il s'agit du passage à la vitesse supérieure ou du passage à la vitesse inférieure.

5. Synchroniseur selon la revendication 1, **caractérisé en ce que** les pentes (18, 19) sont inclinées de façon différente.

6. Synchroniseur selon l'une des revendications 1 à 5, **caractérisé en ce que** la surface de friction (3) est conformée en surface de friction à cône simple.

7. Synchroniseur selon l'une des revendications 1 à 5, **caractérisé en ce que** la surface de friction (3) est conformée en surface de friction à cônes multiples.

8. Synchroniseur selon l'une des revendications 1 à 5, **caractérisé en ce que** la surface de friction (3) est conformée en surface de friction à lamelles.

9. Manchon de commutation (13) destiné à un synchroniseur (1) selon la revendication 1, **caractérisé par** une denture intérieure (14) indexée et adaptée aux angles de blocage.
